# EUROPEAN PATENT SPECIFICATION

(11) **EP 2 589 901 B1**
(45) Date of publication and mention of the grant of the patent: **05.09.2018**
(21) Application number: 12191093.9
(22) Date of filing: 02.11.2012
(51) Int. Cl.: F25B 49/02, F25B 13/00

(54) **Refrigeration cycle apparatus and hot water generator**
Kühlzyklusvorrichtung und Heißwassergenerator
Appareil de cycle de réfrigération et générateur d'eau chaude

(30) Priority: 04.11.2011 JP 2011241897
(43) Date of publication of application: 08.05.2013
(73) Proprietor: Panasonic Corporation, Kadoma-shi Osaka 571-8501 (JP)
(72) Inventor: Isayama, Yasuhiko, Osaka, 540-6207 (JP); Arashima, Hiroshi, Osaka, 540-6207 (JP); Moriwaki, Shunji, Osaka, 540-6207 (JP); Matsui, Masaru, Osaka, 540-6207 (JP); Aoyama, Shigeo, Osaka, 540-6207 (JP)
(74) Representative: Eisenführ Speiser

(56) References cited:
- JP-A- 2005 155 981
- US-A1- 2002 129 612

## Description

### [Technical Field]

The present invention relates to a refrigeration cycle apparatus and a hot water generator using the refrigeration cycle apparatus.

### [Background Technique]

A conventional refrigeration cycle apparatus of this kind includes a heating device for heating a compressor when a predetermined condition is not satisfied so that reliability of the compressor is not deteriorated when the refrigeration cycle apparatus is started in a state where an ambient temperature is low (see patent document 1 for example).

Figs. 6 show a conventional refrigeration cycle apparatus described in patent document 1. As shown in Fig. 6(a), according to the refrigeration cycle apparatus 100, a compressor 111, a radiator 112 which functions as a condenser and which heats a flowing heat medium, an expansion valve 113 and an evaporator 114 are annularly and sequentially connected, through refrigerant pipes, to a refrigerant circuit 110 through which a refrigerant is circulated.

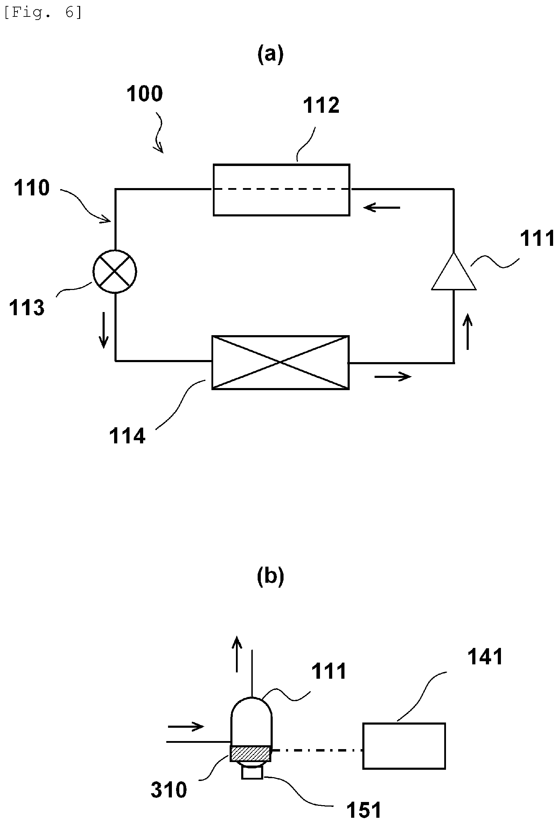

As shown in Fig. 6(b), the compressor 111 is provided with a heating device 310 which heats the compressor 111, and a temperature sensor 151 which detects a refrigeration oil temperature (compressor shell temperature) Td of the compressor 111. The compressor 111 is further provided with a control unit 141.

Operation of the refrigeration cycle apparatus 100 will be explained based on a heating operation for heating a heat medium utilizing condensation latent heat of the radiator 112.

When the refrigeration cycle apparatus 100 is started from a state where the compressor 111 stops when an ambient temperature of the refrigeration cycle apparatus 100 is low, the temperature sensor 151 provided in the compressor 111 detects a compressor shell temperature Td.

If the compressor shell temperature Td is equal to or higher than a predetermined temperature (set temperature), the control unit 141 determines that liquid refrigerant and refrigeration oil remain in a shell bottom of the compressor 111 when the compressor 111 is started, and refrigeration oil can be supplied to a compressing mechanism or a bearing. Hence, the control unit 141 does not operate the heating device 151.

When the compressor shell temperature Td is lower than the predetermined temperature (set temperature), the control unit 141 determines that viscosities of the liquid refrigerant and refrigeration oil in the compressor 111 become high and flowability is deteriorated, and lubrication failure is generated in the compressing mechanism or the bearing. Hence, the control unit 141 operates the heating device 151. According to this configuration, the refrigeration oil is supplied to the compressing mechanism or the bearing, and reliability of the compressor 111 is secured.

Moreover, US patent application 2002/0129612 A1 discloses a refrigeration cycle according to the preamble of claim 1 having a residual refrigerant, which is designed that the refrigerating machine oil does not stagnate in the refrigeration cycle after flowing out from the compressor even if the refrigerating machine oil is weakly soluble in a refrigerant. A control section is provided for controlling saturated oil solubility in a liquid refrigerant in the refrigeration cycle. The control section includes a receiver and first and second flow regulators which are placed before and after, respectively, the receiver. A residual liquid refrigerant obtaining in the circulation of a refrigerant is reserved in the receiver at a high temperature so that the weakly soluble refrigerating machine oil is prevented from separating.

### [Prior Art Document]

### [Patent Document]

[Patent Document 1] Japanese Patent Application Laid-open No.2005-155981
[Patent Document 2] United States Patent Application Publication No. 2002/0129612 A1

### [Summary of the Invention]

### [Problem to be Solved by the Invention]

According to the conventional configuration, however, when a compressor shell temperature of a high pressure shell type compressor is low and a temperature of a heat medium flowing through the radiator is high, i.e., when a temperature difference between the heat medium and the compressor is great, if the compressor which is in a halting state for a long time is started, a refrigerant is heated, pressure of the refrigerant is increased, and a saturation temperature of the refrigerant becomes high.

On the other hand, a rising speed of the compressor shell temperature of the compressor becomes slow due to heat capacity, an overheated gas refrigerant discharged from a compression chamber of the compressor is condensed and becomes a liquid refrigerant. Hence, both the liquid refrigerant and the refrigeration oil flow out from a discharge pipe of the compressor, and the refrigeration oil of the compressor becomes insufficient. As a result, refrigeration oil can not be supplied to the compressing mechanism or the bearing, and the reliability of the compressor is deteriorated.

The present invention has been accomplished to solve the conventional problem, and it is an object of the invention to provide a refrigeration cycle apparatus capable of reliably supplying a refrigeration oil to a compressing mechanism or a bearing, and capable of enhancing reliability of a compressor.

### [Means for Solving the Problem]

To solve the conventional problem, the present invention provides a refrigeration cycle apparatus comprising: a refrigerant circuit which is formed by annularly and sequentially connecting a compressor, a radiator, expansion means and an evaporator to one another through refrigerant pipes, and through which a refrigerant is circulated; a first temperature sensor which detects a temperature of the compressor or a temperature of the refrigerant pipe through which the compressor and the radiator are connected to each other; a second temperature sensor which detects a temperature of a heat medium which is a to-be heated body of the radiator; a heating device which heats the compressor; and a control unit; characterized in that the control unit operates the heating device when the temperature detected by the second temperature sensor becomes higher than the temperature detected by the first temperature sensor by a predetermined temperature difference or more.

According to this means, when a compressor shell temperature of a high pressure shell type compressor is low and a temperature of a heat medium flowing through the radiator is high, the heating device is operated and if the compressor shell temperature rises and becomes equal to or higher than a saturation temperature by operating the heating device, an overheated gas refrigerant discharged from the compression chamber is less prone to be condensed in the compressor, and the overheated gas refrigerant can be discharged from the discharge pipe of the compressor as a gas refrigerant which keeps the superheat degree.

As a result, since amounts of both the liquid refrigerant and the refrigeration oil which flow out from the compressor can be reduced, it is possible to reliably supply refrigeration oil to the compressing mechanism or the bearing, and to enhance the reliability of the compressor.

### [Effect of the Invention]

According to the present invention, it is possible to provide a refrigeration cycle apparatus capable of reliably supplying a refrigeration oil to a compressing mechanism or a bearing, and capable of enhancing reliability of a compressor.

### [Brief Description of the Drawings]

Fig. 1 is a schematic block diagram of a hot water generator according to a first embodiment of the present invention;
Fig. 2 is a diagram showing contents of control of a heating device;
Fig. 3 is a diagram showing change with the passage of time of a refrigeration cycle when operation of a conventional refrigeration cycle apparatus is started;
Fig. 4 is a diagram showing change with the passage of time of a refrigeration cycle when operation of a refrigeration cycle apparatus according to the first embodiment of the invention is started;
Fig. 5 is a flowchart of control of operation of the refrigeration cycle apparatus according to the first embodiment of the invention; and
Fig. 6 (a) is a schematic block diagram of a conventional refrigeration cycle apparatus, and Fig. 6(b) is a schematic block diagram of a conventional compressor.

### [Explanation of Symbols]

- 1A: hot water generator
- 1B: refrigeration cycle apparatus
- 2: refrigerant circuit
- 3: heat medium circuit
- 4: control unit
- 21: compressor
- 22: radiator
- 23: expansion valve (expansion means)
- 24: evaporator
- 26: refrigerant pipe
- 31: heating device
- 51: first temperature sensor
- 52: second temperature sensor
- 61: first superheat degree detecting means
- 62: second superheat degree detecting means

### [Mode for Carrying Out the Invention]

A first aspect of the invention provides a refrigeration cycle apparatus comprising: a refrigerant circuit which is formed by annularly and sequentially connecting a compressor, a radiator, expansion means and an evaporator to one another through refrigerant pipes, and through which a refrigerant is circulated; a first temperature sensor which detects a temperature of the compressor or a temperature of the refrigerant pipe through which the compressor and the radiator are connected to each other; a second temperature sensor which detects a temperature of a heat medium which is a to-be heated body of the radiator; a heating device which heats the compressor; and a control unit; characterized in that the control unit operates the heating device when the temperature detected by the second temperature sensor becomes higher than the temperature detected by the first temperature sensor by a predetermined temperature difference or more.

According to this configuration, when a compressor shell temperature of a high pressure shell type compressor is low and a temperature of a heat medium flowing through the radiator is high, i.e., when a temperature difference between the heat medium and the compressor is great, if the compressor which is in a halting state for a long time is started, a refrigerant is heated in the radiator, pressure of the refrigerant is increased, and a saturation temperature of the refrigerant becomes high.

Hence, if the compressor shell temperature rises and becomes equal to or higher than the saturation temperature by operating the heating device, an overheated gas refrigerant discharged from the compression chamber is less prone to be condensed in the compressor, and the overheated gas refrigerant can be discharged from the discharge pipe of the compressor as a gas refrigerant which keeps the superheat degree.

As a result, since amounts of both the liquid refrigerant and the refrigeration oil which flow out from the compressor can be reduced, it is possible to reliably supply refrigeration oil to the compressing mechanism or the bearing, and to enhance the reliability of the compressor.

According to a second aspect of the invention, in the first aspect, the refrigeration cycle apparatus further includes first superheat degree detecting means which detects a superheat degree of the refrigerant discharged from the compressor, and the control unit controls number of rotations of the compressor such that a circulation amount of the refrigerant becomes equal to or smaller than a predetermined value until the superheat degree detected by the first superheat degree detecting means becomes equal to a predetermined value.

According to this, the refrigeration cycle apparatus is operated in a state where a circulation amount of the refrigerant is small until the refrigerant is brought into a superheated state where it can be determined that condensation of the discharge refrigerant in the compressor shell is completed. Hence, an amount of the refrigerant itself discharged from the compressor is reduced, and a content rate of refrigeration oil which is mixed into the discharge refrigerant and which flows out from the compressor is reduced.

As a result, it is possible to further reduce a flow-out amount of refrigeration oil which flows out from the compressor, and to enhance the reliability of the compressor.

According to a third aspect of the invention, in the first or second aspect, the refrigeration cycle apparatus further includes second superheat degree detecting means which detects a superheat degree of the refrigerant flowing out from the evaporator, and the control unit controls an opening degree of the expansion means such that the superheat degree detected by the second superheat degree detecting means becomes equal to a predetermined value.

According to this configuration, since the expansion vale is controlled such that a superheat degree at the evaporator outlet in the refrigeration cycle becomes equal to a predetermined superheat degree (high superheat degree such as 10 deg for example), the refrigerant sucked into the compressor is brought into the superheated state and heats the compressor.

As a result, since the rising speed of the shell temperature of the compressor becomes fast, it is possible to suppress the condensation of a heated gas refrigerant in the compressor shell, an operation for flowing both the liquid refrigerant and the refrigeration oil out from the compressor can be completed in a short time.

A fourth aspect of the invention provides a hot water generator using the refrigeration cycle apparatus according to any one of the first to third aspects, the heat medium is water or antifreeze liquid, and the water or the antifreeze liquid heated by the radiator is utilized for supplying hot water and/or heating.

According to this configuration, the heat medium can wisely be used for a heating device (floor heating system, panel heater utilizing natural convection, and fan-convector utilizing forced convection) and a water heater.

An embodiment of the present invention will be described below with reference to the drawings. The invention is not limited to the embodiments.

### (First Embodiment)

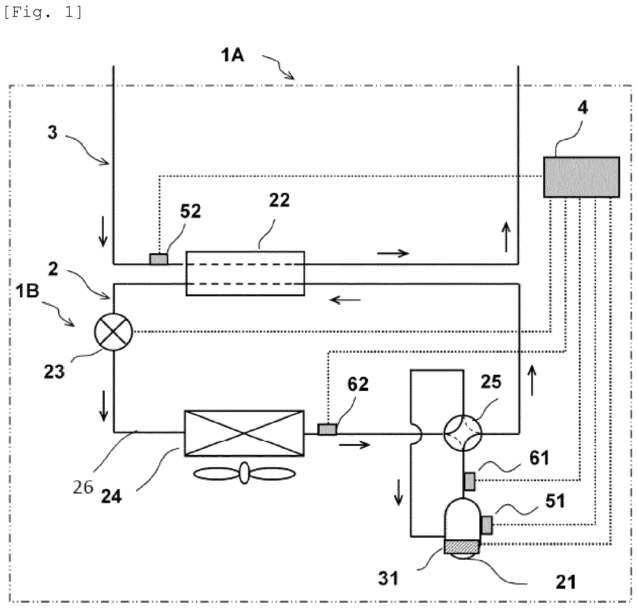

Fig. 1 is a schematic block diagram of a hot water generator 1A according to a first embodiment of the present invention. The hot water generator 1A includes a refrigeration cycle apparatus 1B and a heat medium circuit 3.

The refrigeration cycle apparatus 1B includes a refrigerant circuit 2 through which a refrigerant is circulated. As the refrigerant, it is possible to use a zeotropic mixed refrigerant such as R407C, a pseudo-azeotropic mixed refrigerant such as R410A, and a single refrigerant such as R32.

A high pressure shell type compressor 21, a radiator 22, expansion means (expansion vale) 23, and an evaporator 24 are annularly and sequentially connected to the refrigerant circuit 2 through refrigerant pipes 26. In this embodiment, a four-way valve 25 is connected to the refrigerant circuit 2. The four-way valve 25 switches the refrigerant pipe 26 connected to a discharge port of the compressor 21 to the radiator 22 or the evaporator 24, and switches the refrigerant pipe 26 connected to a suction port of the compressor 21 to the evaporator 24 or the radiator 22. The four-way valve 25 switches between a heating operation for heating a heat medium of the heat medium circuit 3 utilizing condensation latent heat of a refrigerant in the radiator 22 and a defrosting operation for defrosting frost adhering to the evaporator 24.

A heating device 31 heats the compressor 21 by instructions from a control unit 4.

The refrigeration cycle apparatus 1B further includes a first temperature sensor 51 which detects a temperature of the compressor 21 or a temperature of the refrigerant pipe 26 extending from the compressor 21 to the radiator 22, first superheat degree detecting means 61 which detects a superheat degree of a refrigerant discharged from the compressor 21, and second superheat degree detecting means 62 which detects a superheat degree of a refrigerant flowing out from the evaporator 24.

In this embodiment, the refrigeration cycle apparatus 1B constitutes a hot water generator which utilizes a high temperature heat medium (hot water) generated by the radiator 22 for supplying hot water or heating. The radiator 22 heat-exchanges between a refrigerant and a heat medium.

The heat medium circuit 3 includes the radiator 22 and a second temperature sensor 52 which detects a temperature of a heat medium. The second temperature sensor 52 detects a temperature of a heat medium before it is introduced into the radiator 22.

Motion and operation of the hot water generator constituted as described above will be described below.

In Fig. 1, flowing directions of a refrigerant and a heat medium when the heating operation for heating the heat medium is carried out in the radiator 22 are shown by arrows.

A high pressure refrigerant discharged from the compressor 21 flows into the radiator 22 through the four-way valve 25. The high pressure refrigerant radiates condensation heat, and the refrigerant is cooled, liquefied and condensed. The cooled high pressure liquid refrigerant flows out from the radiator 22.

The high pressure liquid refrigerant which flows out from the radiator 22 is decompressed by the expansion means 23 and expanded and then, the liquid refrigerant flows into the evaporator 24. The low pressure two-phase refrigerant which flows into the evaporator 24 absorbs vaporization heat from air and evaporates, the refrigerant becomes the low pressure two-phase refrigerant or a superheated refrigerant, and flows out from the evaporator 24.

The low pressure refrigerant which flows out from the evaporator 24 passes through the four-way valve 25 and is sucked into the compressor 21. The low temperature heat medium which flows into the radiator 22 heat-exchanges with a refrigerant, becomes a high temperature heat medium and flows out from the radiator 22. The high temperature heat medium which flows out is utilized for the heating device (floor heating system, panel heater utilizing natural convection, and fan-convector utilizing forced convection) or the water heater, radiates heat and then, the heat medium flows into the radiator 22 again and is circulates through the heat medium circuit 3.

The control unit 4 controls the heating device 31 using detection values detected by the first temperature sensor 51 and the second temperature sensor 52. The control unit 4 controls the number of rotations of the compressor 21, the switching operation of the four-way valve 25 and an opening degree of the expansion means 23 using detection values of the first superheat degree detecting means 61 and the second superheat degree detecting means 62.

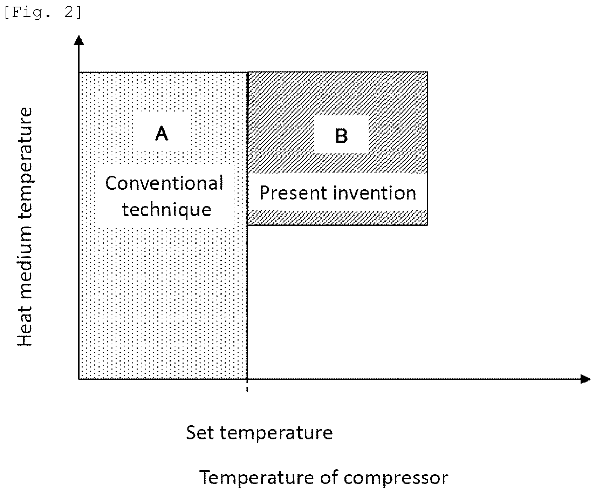

Fig. 2 shows contents of control of the heating device. According to a conventional method, the control unit 4 utilizes only a temperature detected by the first temperature sensor 51, and operates the heating device 31. That is, when a temperature (shell temperature) of the compressor 21 detected by the first temperature sensor 51 is lower than a set temperature (region A in Fig. 2), the control unit 4 operates the heating device 31, and when the shell temperature is equal to or higher than the set temperature, the control unit 4 stops the heating device 31, both irrespective of the heat medium temperature as shown in Fig. 2. The set temperature is set to winter outside air temperature, e.g., about 10°C.

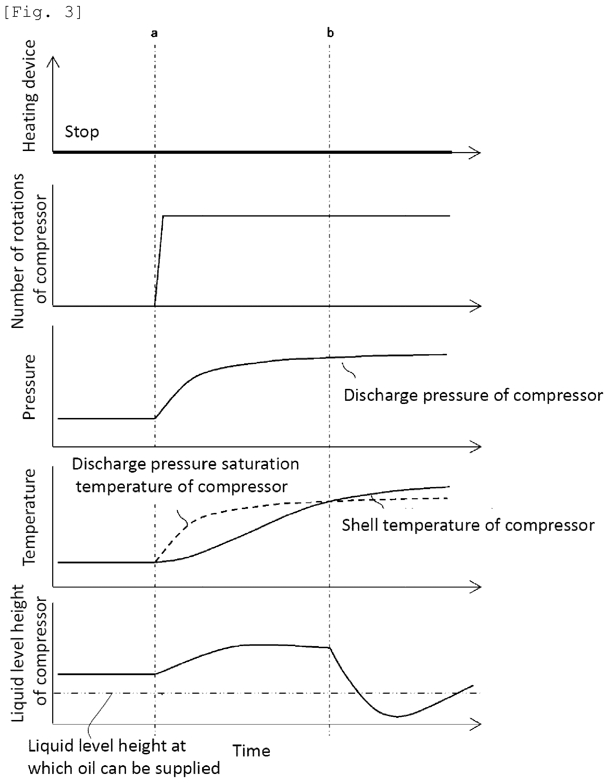

At this time, Fig. 3 shows a case where the heating operation is started in a state where a temperature of a heat medium flowing through the radiator 22 is higher than a shell temperature of the high pressure shell type compressor 21 and a temperature difference between the heat medium temperature and the shell temperature is great. An example this state is a state where the heating operation for heating a heat medium to a high temperature is carried out by the refrigeration cycle apparatus 1B, and after a thermostat is turned OFF and the compressor 21 is stopped, a shell temperature of the compressor 21 is lowered to a temperature in the vicinity of an ambient temperature of the compressor 21 and a long time is elapsed. When the compressor 21 is started (a in Fig. 3), a refrigerant is heated in the radiator 22, a pressure of the refrigerant abruptly rises and a discharge pressure saturation temperature of the refrigerant becomes high.

On the other hand, the compressor 21 is heated by a compressing operation, but the shell temperature of the compressor 21 gradually rises from the temperature in the vicinity of the ambient temperature of the compressor 21 due to heat capacity of the compressor 21 itself. At this time, like sections a to b in Fig. 3, the shell temperature of the compressor 21 becomes lower than the saturation temperature of the discharge pressure, and the overheated gas refrigerant discharged from the compression chamber is condensed in the compressor 21.

The refrigerant which becomes the liquid refrigerant by the condensation is mixed with refrigeration oil in the compressor 21, a liquid level (refrigeration oil + liquid refrigerant) of the compressor 21 rises and a large amount of the refrigerant is discharged out from the discharge pipe of the compressor 21. Thereafter, if the shell temperature of the compressor 21 becomes higher than the saturation temperature of the discharge pressure as shown by b and thereafter in Fig. 3, since a refrigerant component in the refrigeration oil evaporates, the liquid level is lowered at a dash, and the liquid level becomes lower than a liquid level height at which oil can be supplied.

According to this, there is a possibility that the compressor 21 is damaged due to supply failure of oil to the compressing mechanism or the bearing in the compressor 21. To generate a high temperature heat medium, to utilize the refrigeration cycle apparatus and the hot water generator for wide use and under wide environment conditions, and to secure reliability of the device, it is important to restrain the refrigeration oil from being discharged when the refrigeration cycle apparatus is started.

Although it will be described in detail later, in the conventional technique, when the shell temperature is equal to or higher than the set temperature, the heating device 31 does not operate. In this embodiment, when the temperature of the heat medium becomes higher than the shell temperature of the compressor 21 by a predetermined temperature difference or more (region B in Fig. 2), the heating device 31 is operated and after predetermined time is elapsed, the compressor 21 is started. At that time, the number of rotations of the compressor 21 is reduced and the compressor 21 is operated so that a circulation amount of the refrigerant becomes smaller than a predetermined circulation amount.

The control unit 4 controls such that a superheat degree of a refrigerant flowing out from the evaporator 24 becomes equal to a predetermined superheat degree.

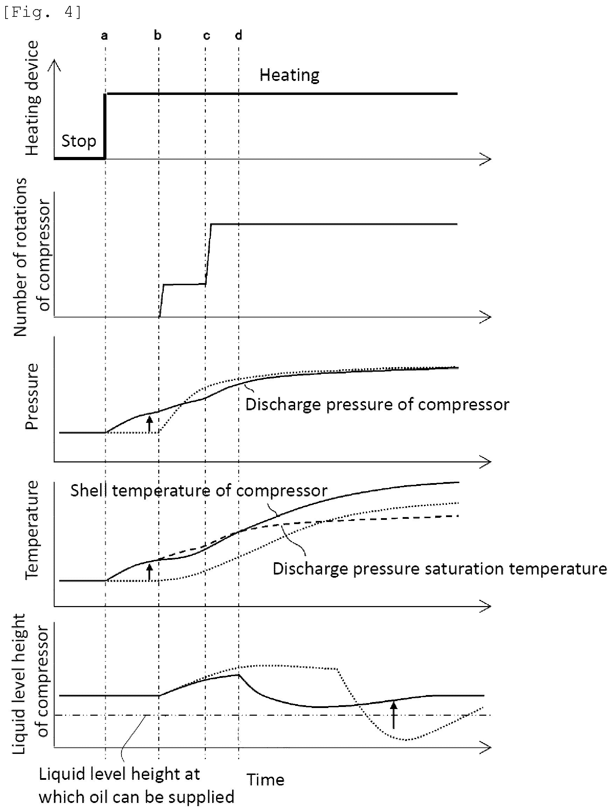

According to this control, after the heating device 31 is operated (a in Fig. 4), the shell temperature rises (b in Fig. 4), and a discharge pressure saturation temperature of the compressor 21 becomes high. Thereafter, like sections b to c in Fig. 4, the compressor 21 is operated with the low number of rotations to suppress the circulation amount, the overheated gas refrigerant discharged from the compression chamber of the compressor 21 is less prone to be condensed in the compressor 21. Further, since the compressor 21 is operated in a state where the circulation amount of the refrigerant is small, an amount of a refrigerant itself which is discharged from the compressor 21 is reduced, the refrigerant is mixed with a discharge refrigerant, and a content rate of refrigeration oil flowing out from the compressor 21 is reduced. The sucked refrigerant in the compressor 21 is brought into a superheated state and heats the compressor 21.

Therefore, amounts of a liquid refrigerant and refrigeration oil flowing out from the compressor 21 can be reduced. As compared with the conventional technique, and the operation for flowing the liquid refrigerant and the refrigeration oil out from the compressor 21 by condensation in the shell is completed in a short time (d in Fig. 4) . Hence, a high refrigeration oil level in the compressor 21 when it is started is secured, and it is possible to enhance the reliability of the compressor 21.

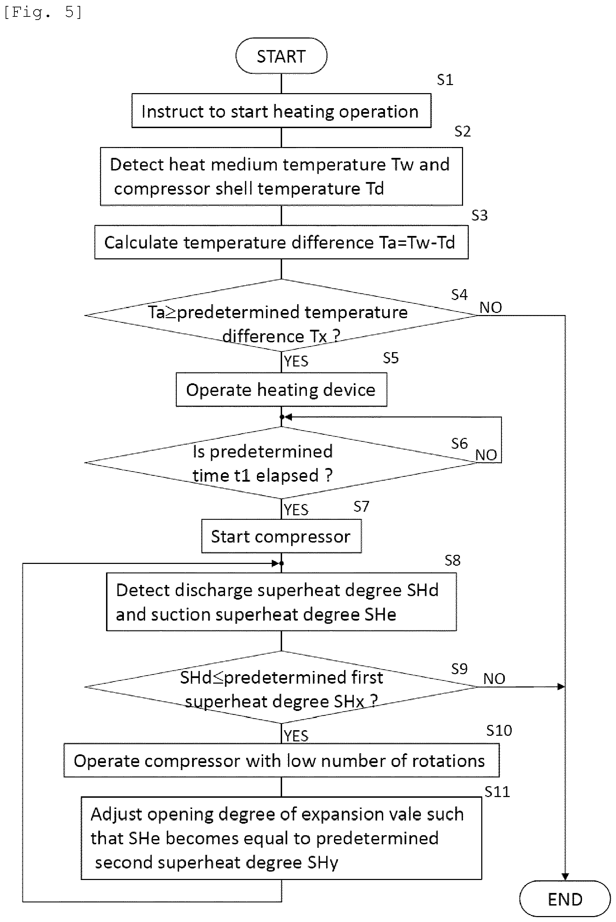

Control of the control unit 4 will be described below in detail with reference to a flowchart shown in Fig. 5.

First, the control unit 4 receives instructions for starting a heating operation which are input through a remote control, and carries out the heating operation (step 1 (S1)).

Next, the second temperature sensor 52 detects a heat medium temperature Tw, the first temperature sensor 51 detects a compressor shell temperature Td (step 2), and a temperature difference Ta between the heat medium temperature Tw and the compressor shell temperature Td is calculated by Ta = Tw - Td (step 3).

Next, the control unit 4 compares the temperature difference Ta and a predetermined temperature difference Tx with each other, and determines whether the temperature difference Ta is equal to or greater than the temperature difference Tx (step 4).

When the temperature difference Ta is smaller than the predetermined temperature difference Tx (NO in step 4), it is determined that a discharge refrigerant is less prone to be condensed in the shell of the compressor 21, and the control of the starting operation is completed.

On the other hand, if the temperature difference Ta is equal to or greater than the predetermined temperature difference Tx (YES in step 4), it is determined that the discharge refrigerant is prone to be condensed in the shell of the compressor 21, the heating device 31 is operated (step 5) .

Thereafter, the control unit 4 determines whether predetermined time t1 is elapsed after the heating device 31 is operated (step 6). When the predetermined time t1 is not elapsed (NO in step 6), the current state is maintained. When the predetermined time t1 is elapsed (YES in step 6), the compressor 21 is started (step 7).

Next, the control unit 4 controls such that the first superheat degree detecting means 61 detects a discharge superheat degree SHd and the second superheat degree detecting means 62 detects a suction superheat degree SHe (step 8). The discharge superheat degree SHd and a predetermined first superheat degree SHx are compared with each other, and it is determined whether the discharge superheat degree SHd is equal to or smaller than a first superheat degree SHx (step 9).

When the discharge superheat degree SHd is greater than the predetermined first superheat degree SHx (NO in step 9), it is determined that the condensation of the discharge refrigerant in the shell of the compressor 21 is completed, and the control of the starting operation is completed.

On the other hand, when the discharge superheat degree SHd is equal to or smaller than the predetermined first superheat degree SHx (YES in step 9), it is determined that it is necessary to prevent a refrigerant in the shell of the compressor 21 from being condensed, the number of rotations of the compressor 21 is reduced so that the circulation amount of a refrigerant in the refrigeration cycle 2 becomes equal to or smaller than a predetermined value and the compressor is operated (step 10), and an opening degree of the expansion means 23 is adjusted so that the suction superheat degree SHe becomes equal to a predetermined second superheat degree SHy (step 11). Then, the procedure is returned to step 8.

As described above, the refrigeration cycle apparatus of the embodiment includes the heating device 31 which heats the compressor 21, the first temperature sensor 51 which detects a temperature of the compressor 21 or a temperature of the refrigerant pipe 26 reaching the radiator 22, the second temperature sensor 52 which detects a temperature of a heat medium in the heat medium circuit 3, and the control unit 4. When the temperature Tw detected by the second temperature sensor 52 becomes equal to or higher than the temperature Td by the first temperature sensor 51 by the predetermined temperature difference Tx or more, the control unit 4 controls such that the heating device 31 is operated and after the predetermined time t1 is elapsed, the compressor 21 is started.

According to this, when the shell temperature of the high pressure shell type compressor 21 is low and a temperature of a heat medium flowing through the radiator 22 is high, the heating device 31 of the compressor 21 is operated. According to this, if the shell temperature rises and becomes higher than the saturation temperature, the overheated gas refrigerant discharged from the compression chamber of the compressor 21 is less prone to be condensed in the compressor 21, and gas which secures a superheat degree can be discharged from the discharge pipe of the compressor 21 as a gas refrigerant.

As a result, since the amounts of the liquid refrigerant and the refrigeration oil which flow out from the compressor 21 can be reduced, it is possible to reliably supply the refrigeration oil to the compressing mechanism or the bearing, and to enhance the reliability of the compressor 21.

The refrigeration cycle apparatus of this embodiment includes the first superheat degree detecting means 61 which detects a superheat degree of a refrigerant discharged from the compressor 21. The compressor 21 is operated such that the circulation amount of a refrigerant is set less than the predetermined value until the superheat degree SHd detected by the first superheat degree detecting means 61 exceeds the predetermined first superheat degree SHx.

According to this configuration, the compressor 21 is operated in a state where the circulation amount of the refrigerant is small until the superheated state is brought into a state where it can be determined that the condensation of a discharge refrigerant in the compressor shell is completed. Therefore, the amount of a refrigerant itself discharged from the compressor 21 is reduced and the refrigeration oil is mixed with the discharge refrigerant and the content rate of the refrigeration oil flowing out from the compressor 21 is reduced.

As a result, it is possible to further reduce the flow-out amount of the refrigeration oil flowing out from the compressor 21, and to enhance the reliability of the compressor 21.

The expansion means 23 is controlled such that the suction superheat degree SHe detected by the second superheat degree detecting means 62 which detects a superheat degree of a refrigerant flowing out from the evaporator 24 becomes equal to the predetermined second superheat degree SHy.

According to this configuration, since the expansion means 23 is controlled such that an outlet superheat degree SHe of the evaporator 24 in the refrigerant circuit 2 becomes equal to the predetermined superheat degree (e.g., high superheat degree such as 10 deg), a suction refrigerant of the compressor 21 is brought into the superheated state and heats the compressor 21.

As a result, the shell temperature of the compressor 21 rises faster, condensation of the overheated gas refrigerant in the compressor shell can be suppressed, and the operation for flowing the liquid refrigerant and the refrigeration oil out from the compressor 21 can be completed in a short time.

The heat medium is air, water or antifreeze liquid. According to the refrigeration cycle apparatus of the embodiment, a heat medium heated by the radiator 22 is utilized at least for supplying hot water or heating. Therefore, the radiator 22 may be a heat exchanger between refrigerant and air, between refrigerant and water, or between refrigerant and antifreeze liquid, and it is unnecessary to limit the kind of the radiator 22.

As a result, it is possible to widely use the heat medium for a heating device (floor heating system, panel heater utilizing natural convection, and fan-convector utilizing forced convection) and a water heater.

Although the second temperature sensor 52 is provided on the side of the inlet of the radiator 22 in the heat medium circuit 3 in Fig. 1, the second temperature sensor 52 may be provided at any position of the heat medium circuit 3.

### [Industrial Applicability]

The present invention is especially useful for a hot water generator which generates hot water by a refrigeration cycle apparatus and utilizes the hot water for supplying hot water or heating.

## Claims

1. A refrigeration cycle apparatus (1B) comprising:
a refrigerant circuit (2) which is formed by annularly and sequentially connecting a compressor (21), a radiator (22), expansion means (23) and an evaporator (24) to one another through refrigerant pipes (26), and through which a refrigerant is circulated;
a first temperature sensor (51) which detects a temperature of the compressor (21) or a temperature of the refrigerant pipe (26) through which the compressor (21) and the radiator (22) are connected to each other;
a second temperature sensor (52) which detects a temperature of a heat medium which is a to-be heated body of the radiator (22);
a heating device (31) which heats the compressor (21); and
a control unit (4, 141);
**characterized in**
**that** the control unit (4, 141) operates the heating device (31) when the temperature detected by the second temperature sensor (52) becomes higher than the temperature detected by the first further temperature sensor (51) by a predetermined temperature difference or more.

2. The refrigeration cycle apparatus (1B) according to claim 1, further comprising first superheat degree detecting means (61) which detects a superheat degree of the refrigerant discharged from the compressor (21), **characterized in that**
the control unit (4, 141) controls number of rotations of the compressor (21) such that a circulation amount of the refrigerant becomes equal to or smaller than a predetermined value until the superheat degree detected by the first superheat degree detecting means (61) becomes equal to a predetermined value.

3. The refrigeration cycle apparatus (1B) according to claim 1 or 2, further comprising second superheat degree detecting means (62) which detects a superheat degree of the refrigerant flowing out from the evaporator (24), **characterized in that**
the control unit (4, 141) controls an opening degree of the expansion means (23) such that the superheat degree detected by the second superheat degree detecting means (62) becomes equal to a predetermined value.

4. A hot water generator (1A) using the refrigeration cycle apparatus (1B) according to any one of claims 1 to 3, **characterized in that** the heat medium is water or antifreeze liquid, and the water or the antifreeze liquid heated by the radiator (22) is utilized for supplying hot water and/or heating.

## Patentansprüche

1. Kühlkreislaufvorrichtung (1B) enthaltend:
einen Kältemittelkreislauf (2), der durch ringförmiges und sequentielles Verbinden von einem Kompressor (21), einem Radiator (22), Expansionsmitteln (23) und einem Verdampfer (24) miteinander durch Kältemittelleitungen (26) ausgebildet ist und durch den ein Kältemittel zirkuliert;
einen ersten Temperatursensor (51), der eine Temperatur des Kompressors (21) oder eine Temperatur der Kältemittelleitung (26) detektiert, durch die der Kompressor (21) und der Radiator (22) miteinander verbunden sind;
einen zweiten Temperatursensor (52), der eine Temperatur eines Heizmediums detektiert, das ein zu erwärmender Körper des Radiators (22) ist;
eine Heizeinrichtung (31), die den Kompressor (21) erwärmt; und
eine Steuereinheit (4, 141);
**dadurch gekennzeichnet,**
**dass** die Steuereinheit (4, 141) die Heizeinrichtung (31) betreibt, wenn die von dem zweiten Temperatursensor (52) erfasste Temperatur um eine vorbestimmte Temperaturdifferenz oder mehr größer wird als die von dem ersten weiteren Temperatursensor (51) erfasste Temperatur.

2. Kühlkreislaufvorrichtung (1B) nach Anspruch 1, ferner enthaltend erste Überhitzungsgraderfassungsmittel (61), die einen Überhitzungsgrad des aus dem ersten Kompressor (21) abgegebenen Kältemittels erfassen, **dadurch gekennzeichnet, dass**
die Steuereinheit (4, 141) die Anzahl der Rotationen des Kompressors (21) so steuert, dass eine Umlaufmenge des Kältemittels gleich oder kleiner als ein vorbestimmter Wert wird, bis der von den ersten Überhitzungsgraderfassungsmitteln (61) erfasste Überhitzungsgrad gleich einem vorbestimmten Wert wird.

3. Kühlkreislaufvorrichtung (1B) nach Anspruch 1 oder 2, ferner enthaltend zweite Überhitzungsgraderfassungsmittel (62), die einen Überhitzungsgrad des aus dem Verdampfer (24) austretenden Kältemittels erfassen, **dadurch gekennzeichnet, dass**
die Steuereinheit (4, 141) einen Öffnungsgrad der Expansionsmittel (23) so steuert, dass der von den zweiten Überhitzungsgraderfassungsmitteln (62) erfasste Überhitzungsgrad gleich einem vorbestimmten Wert wird.

4. Heißwassergenerator (1A) unter Verwendung der Kühlkreislaufvorrichtung (1B) nach einem der Ansprüche 1 bis 3, **dadurch gekennzeichnet, dass**
das Heizmedium Wasser oder Frostschutzmittelflüssigkeit ist, und das vom Radiator (22) erwärmte Wasser oder die vom Radiator (22) erwärmte Frostschutzmittelflüssigkeit zum Versorgen mit Heißwasser und/oder zum Heizen verwendet wird.

## Revendications

1. Appareil à cycle de réfrigération (1B) comprenant:
un circuit de réfrigérant (2) qui est formé par raccordement annulaire et séquentiel d'un compresseur (21), d'un radiateur (22), d'un moyen d'expansion (23) et un évaporateur (24) les uns aux autres par l'intermédiaire de tuyaux de réfrigérant (26), et à travers lequel un réfrigérant est mis en circulation;
un premier capteur de température (51) qui détecte une température du compresseur (21) ou une température du tuyau de réfrigérant (26) par lequel le compresseur (21) et le radiateur (22) sont raccordés l'un à l'autre;
un second capteur de température (52) qui détecte une température d'un milieu caloporteur qui est un corps à chauffer du radiateur (22);
un dispositif de chauffage (31) qui chauffe le compresseur (21); et
une unité de commande (4, 141);
**caractérisé en ce que**
l'unité de commande (4, 141) fait fonctionner le dispositif de chauffage (31) lorsque la température détectée par le second capteur de température (52) devient supérieure à la température détectée par le premier capteur de température supplémentaire (51) d'une différence de température prédéterminée ou plus.

2. Appareil à cycle de réfrigération (1B) selon la revendication 1, comprenant en outre un premier moyen de détection de degré de surchauffe (61) qui détecte un degré de surchauffe du réfrigérant évacué par le compresseur (21), **caractérisé en ce que**
l'unité de commande (4, 141) commande le nombre de rotations du compresseur (21) de telle sorte qu'une quantité de circulation du réfrigérant devienne égale ou inférieure à une valeur prédéterminée jusqu'à ce que le degré de surchauffe détecté par le premier moyen de détection de degré de surchauffe (61) devienne égal à une valeur prédéterminée.

3. Appareil à cycle de réfrigération (1B) selon la revendication 1 ou 2, comprenant en outre un second moyen de détection de degré de surchauffe (62) qui détecte un degré de surchauffe du réfrigérant s'écoulant hors de l'évaporateur (24), **caractérisé en ce que**
l'unité de commande (4, 141) commande un degré d'ouverture du moyen d'expansion (23) de telle sorte que le degré de surchauffe détecté par le second moyen de détection de degré de surchauffe (62) devienne égal à une valeur prédéterminée.

4. Générateur d'eau chaude (1A) utilisant l'appareil à cycle de réfrigération (1B) selon l'une quelconque des revendications 1 à 3, **caractérisé en ce que** le milieu caloporteur est de l'eau ou un liquide antigel, et l'eau ou le liquide antigel chauffé par le radiateur (22) est utilisé pour fournir de l'eau chaude et/ou du chauffage.
